Europäisches Patentamt

European Patent Office

Office européen des brevets

(11) Numéro de publication: **0 415 848 A1**

## (12) DEMANDE DE BREVET EUROPEEN

(21) Numéro de dépôt: 90402396.7

(22) Date de dépôt: 30.08.90

(51) Int. Cl.⁵: **F17D 5/06**, G01M 3/24, G01V 1/00, G01N 29/00

(30) Priorité: **30.08.89 FR 8911399**

(43) Date de publication de la demande:
**06.03.91 Bulletin 91/10**

(84) Etats contractants désignés:
**ES GB IT**

(71) Demandeur: **COFLEXIP Société Anonyme**
**23 Avenue de Neuilly**
**F-75116 Paris(FR)**

Demandeur: **INSTITUT FRANCAIS DU PETROLE**
**4, Avenue de Bois-Préau**
**F-92502 Rueil-Malmaison(FR)**

(72) Inventeur: **Mallen, José**
**29, Bld. des Batignolles**
**F-75008 Paris(FR)**
Inventeur: **Roget, James**
**76, Résidence les Jonquilles**
**F-60700 Pont Ste Maxence(FR)**
Inventeur: **Sugier, André**
**34, avenue de la Châtaigneraie**
**F-92500 Rueil Malmaison(FR)**

(74) Mandataire: **Leszczynski, André et al**
**CABINET NONY & CIE. 29 rue Cambacérès**
**F-75008 Paris(FR)**

(54) **Procédé de surveillance en service de câbles et conduites tubulaires flexibles et capteur acoustique pour la mise en oeuvre de ce procédé.**

(57) L'invention est relative à un procédé de surveillance en service de câbles et conduites tubulaires flexibles comportant au moins une couche d'armure de résistance à la traction composée de fils métalliques.

On détecte à partir d'au moins un capteur acoustique (6) disposé sur/ou au voisinage des fils d'armure (2) les ondes ultrasonores émises par le câble ou la conduite en service, on traite et analyse (7,8,9) les signaux émis par le ou les capteurs de façon à identifier des caractéristiques représentatives d'un phénomène d'usure accélérée entre les fils d'armure.

FIG.1

EP 0 415 848 A1

## PROCÉDÉ DE SURVEILLANCE EN SERVICE DE CÂBLES ET CONDUITES TUBULAIRES FLEXIBLES ET CAPTEUR ACOUSTIQUE POUR LA MISE EN OEUVRE DE CE PROCÉDÉ.

La présente invention est relative à un procédé de surveillance en service de câbles et conduites tubulaires flexibles comportant au moins deux nappes d'armure de résistance à la traction composées de fils métalliques.

La présente invention est en particulier relative à la surveillance en service de conduites tubulaires flexibles de transport de fluides sous pression, tels qu'en particulier les hydrocarbures produits lors de l'exploitation de puits sous-marins.

La société COFLEXIP codéposante de la présente demande fabrique et commercialise en grande longueur de telles conduites qui présentent des caractéristiques mécaniques élevées, notamment de résistance à la traction, à l'écrasement et à la pression interne du fluide transporté.

Ainsi la société COFLEXIP fabrique des conduites comportant essentiellement une gaine externe d'étanchéité, une armure de résistance à la traction, composées habituellement de deux nappes croisées constituées chacune de fils disposés en hélice autour de la conduite les fils deux nappes étant enroulés avec des angles opposés par rapport à l'axe de la conduite, une armure de résistance à la pression comportant une ou plusieurs nappes de feuillard agrafé ou de fils profilés enroulés par spiralage sous un angle proche de 90° par rapport à l'axe de la conduite et une gaine interne. La description qui vient d'être donnée s'applique aux conduites de type "smooth-bore"

La société COFLEXIP fabrique également des conduites de type "rough-bore" qui comportent en outre, sous la gaine interne d'étanchéité, une armure de résistance à l'écrasement et à la pression extérieure, constituée généralement par un enroulement hélicoïdal à faible pas d'un ou plusieurs profilés agrafables, notamment du feuillard d'acier.

Dans certains cas, l'armure de résistance à la pression est supprimée et les fils des deux nappes d'armure de résistance à la traction sont posés à l'angle d'équilibre, soit à 55° par rapport à l'axe de la conduite, la résistance à la pression interne étant ainsi assurée par l'armure dite de traction.

La société déposante fabrique également des lignes ombilicales pour le transfert de fluides de service ( électricité et fluide hydraulique), aux éléments de production immergés d'une exploitation pétrolière off-shore, ces lignes ombilicales présentant également des nappes d'armure analogues à celles des conduites mentionnées ci-dessus.

Dans ce qui suit, on se référera essentiellement à des conduites mais il doit être clair que l'invention vise également d'autres types de structures flexibles comportant des fils d'armure notamment les lignes ombilicales visées ci-dessus.

Dans le cadre de l'exploitation pétrolière offshore la rupture d'une conduite de transport d'hydrocarbures, aussi bien celle utilisée pour le transport des hydrocarbures sur le fond sous-marin à partir des différentes têtes de puits (flow-lines), que les conduites utilisées pour remonter les hydrocarbures à la surface (risers) peut avoir des conséquences économiques catastrophiques tant du fait de l'interruption de la production que des atteintes à l'environnement.

Il importe donc de pouvoir surveiller en cours de service l'état de vieillissement et d'usure des différents composants des conduites afin de pouvoir intervenir avant la rupture d'un composant en évitant ainsi les effets dommageables inhérents à cette rupture.

Une des causes essentielles des risques de rupture d'une conduite flexible, en particulier dans le cas des conduites flexibles disposées entre le fonds et un support de surface (du type "riser") ou entre deux supports en mouvement relatif (de type "Jumper") soumises à des effets dynamiques, est l'usure des fils métalliques des nappes d'armure dont le frottement mutuel provoque une réduction progressive de section qui détermine l'augmentation des contraintes dans les fils.

En particulier, dans le cas des conduites flexibles à hautes performances telles que celles de la société déposante, la durée de vie évaluée pour une conduite flexible dynamique qui peut atteindre 20 ans et plus est conditionnée non pas par l'apparition de phénomènes de fatigue dus à l'accumulation des cycles de contrainte alternée, mais par la limite maximale acceptable de réduction de la section des fils d'armure. Au delà de cette limite, il y aurait risque de rupture soit parce que la résistance mécanique du fil usé est devenue trop faible par rapport aux efforts maximaux possibles, soit parce que le matériau est entré dans le domaine où l'apparition et la propagation de défauts peuvent se produire par phénomènes de fatigue.

Ces phénomènes sont analysés dans "Evaluation of flexible pipe's life time expectancy under dynamic conditions" par J.J. FERET, C.L. BOURNAZEL et J. RIGAUD, OTC Mai 1986 n° 5230.

Afin de limiter les phénomènes d'usure par frottement, les armures de traction des conduites flexibles sont lubrifiées.

On constate cependant en cours d'utilisation que des défauts plus ou moins localisés de lubrification peuvent se produire conduisant à des phénomènes d'usure accélérée des fils d'armure.

Ceci peut se produire du fait de la dégradation progressive du lubrifiant ou par suite de la migration du lubrifiant dans les espaces libres entre les fils d'armure, ou encore par suite d'un écoulement par gravité du lubrifiant sur tout ou partie de la conduite.

Un défaut de lubrification au niveau des fils d'armure a pour conséquence d'augmenter les frottements et d'accélérer l'usure des fils, ce qui entraîne une réduction de la durée de vie de la conduite flexible, et risque de provoquer, à la limite, la rupture des fils.

Les déposants ont développé des méthodes de calcul permettant de prévoir l'évolution de l'usure des fils d'armure dans des conditions d'utilisation donnée et de déterminer ainsi la durée de vie minimale et la durée de service acceptable.

Ces méthodes de calcul sont évoquées dans la conférence citée ci-dessus et dans la communication "Calculation of stresses and slip in structural layers of unbonded flexible pipes" par J. FERET et C. BOURNAZEL 1986 OMAE Specialty Symposium - Offshore and Arctic Frontiers. Par contre, il n'existe pas de méthode de mesure connue, applicable de façon suffisamment commode et efficace aux conduites flexibles utilisées dans les conduites décrites ici, permettant de vérifier à tout instant en cours d'utilisation que les conditions de frottement et l'état d'usure des fils d'armure restent à l'intérieur de limites acceptables et de détecter, le cas échéant, que ces limites sont sur le point d'être dépassées dans le cas où, pour une raison quelconque, l'usure des fils se produirait de façon prématurée par rapport aux calculs prévisionnels.

Il peut sembler a priori possible de mesurer directement l'épaisseur des fils d'armure par des palpeurs à ultrasons selon des procédés bien connus. Mais ce procédé est peu pratique, voire impossible dans la plupart des cas du fait qu'il faut poser et câbler les palpeurs directement sur les fils à l'intérieur de la structure du flexible. En outre, on ne peut ainsi obtenir que des mesures trop ponctuelles pour être significatives de l'état réel des conduites flexibles, le nombre de points de mesure restant forcément limité.

On peut également envisager de vérifier que la conduite flexible en service est restée en bon état en la soumettant périodiquement à des essais de mise sous pressions à un niveau déterminé, par exemple à la pression maximale de service. Mais, outre que cette procédure ne fournirait que des informations très limitées, elle s'est avérée pratiquement irréalisable à cause des nombreuses difficultés que présente sa mise en oeuvre dans le cas des canalisations utilisées dans l'exploitation des gisements d'hydrocarbures sous-marins.

La présente invention a pour but de proposer un procédé de surveillance en service de câbles et conduites tubulaires flexibles en détectant précisément l'apparition des phénomènes d'usure accélérée au niveau des fils d'armure, et, plus précisément, au niveau des surfaces en contact des fils métalliques de deux nappes d'armure adjacentes, l'apparition de ces phénomènes d'usure accélérée devant être ainsi détectée préalablement à l'apparition et à la propagation de fissures dans les fils ou à la rupture d'un fil.

Le procédé selon l'invention se caractérise essentiellement par le fait que l'on détecte à partir d'au moins un capteur acoustique disposé sur ou au voisinage des fils d'armure les ondes ultrasonores émises par le câble ou la conduite en service, que l'on traite et analyse les signaux émis par le ou les capteurs de façon à identifier des caractéristiques représentatives d'un phénomène d'usure accélérée entre lesdits fils.

L'origine de la présente invention provient des travaux consacrés par la société COFLEXIP au comportement des conduites flexibles, ces travaux ayant montré que le processus d'usure des fils métalliques d'armure passait par une phase critique d'usure accélérée des fils. Ces fils, dans la pratique, présentent en général une section compacte couramment de forme méplate, les fils d'une nappe étant en contact direct avec les fils d'une nappe adjacente.

Les mouvements relatifs entre fils, auxquels sont liés les effets de frottement et l'usure résultante ainsi que les phénomènes de grippage, présentent la particularité d'être alternatifs, aléatoires, de faible amplitude et en nombre très élevé puisque ces mouvements relatifs sont déterminés par les déformations alternées que subit la conduite flexible, principalement des variations dê courbure à la période de la houle. Il a été trouvé que l'intensité du frottement et l'apparition des effets d'usure accélérée et de grippage tels qu'ils ont été observés sont liés au fait que les déformations de la conduite flexible déterminent des modes de déplacement des fils d'armure qui varient sensiblement dans le temps et en fonction de la situation. C'est ainsi, en particulier, que le déplacement relatif des fils peut se trouver momentanément bloqué. Ces phénomènes complexes, qui conditionnent les caractéristiques des émissions acoustiques objet de la présente invention, ont été expliqués comme étant liés au jeu entre les fils de chaque nappe d'armure.

Il a ainsi été établi que la durée d'utilisation des conduites flexibles doit être limitée à une première phase du processus d'usure des fils pendant laquelle les conditions de lubrification restent correctes. Pendant cette première phase, le frottement entre les fils d'une nappe et les fils de la (ou des) nappe(s) adjacente(s) peut augmenter mais demeure relativement faible (ce frottement étant fonction de la pression de contact entre les deux nappes de fils et conditionné par de nombreux autres facteurs), et l'usure se développe très lentement et de façon très limitée. Les conditions de lubrification et d'usure caractéristiques de cette première phase correspondent aux limites de validité des calculs prévisionnels de comportement à partir desquels on a évalué la durée de vie, durée qui varie selon les cas mais se compte en année : 10 ou 20 ans par exemple. S'il advient qu'un défaut de lubrification commence à apparaître le processus d'usure régulière et lente de la première phase fait place à un processus d'usure accélérée, du type usure par adhésion, et qui est désigné ici, de façon générale, par le terme de grippage. Ce processus d'usure accélérée apparaît principalement sous la forme d'une succession d'effets de grippage ponctuels et très brefs qui se manifestent au niveau des surfaces en contact des fils de deux nappes d'armure adjacentes, et qui correspondent à la rupture de jonctions localisées entre les fils; il peut en outre se trouver complété par un effet d'usure des fils par abrasion, en fonction, en particulier de la quantité de matériau des fils expulsée par suite du processus d'usure accélérée.

Si l'utilisation de la conduite flexible est poursuivie dans les mêmes conditions, les effets de grippage se multiplient, provoquant une augmentation brutale du frottement et une accélération considérable de l'usure, ce qui peut entraîner la rupture des fils dans les zones où le défaut de lubrification est apparu.

La présente invention est basée sur la constatation étonnante que parmi tous les bruits émis par une conduite flexible en fonctionnement un grippage entre les fils d'armure provoque une émission ultrasonore caractéristique qui peut être détectée et utilisée pour la surveillance de l'état de la conduite flexible, cette émission étant due aux ruptures des zones localisées de jonctions dont l'apparition est caractéristique des phénomènes de grippage observés.

De la même façon que dans le cas de diverses techniques connues d'application de l'émission acoustique pour effectuer la surveillance de l'état de fonctionnement d'un équipement mécanique ou de vieillissement d'une structure, une difficulté essentielle rencontrée dans l'élaboration du procédé de surveillance se situe au niveau des méthodes de traitement et d'analyse des signaux qui ont pour but de permettre l'identification des signaux spécifiques au mileu des bruits parasites. Mais, par comparaison avec les techniques connues en émission acoustique, les signaux spécifiques qui font l'objet de la présente invention sont différents, leur caractère particulier étant déterminé par l'évolution des conditions de frottement entre les fils d'armure des conduites flexibles et l'apparition de phénomènes de grippage qui provcquent les signaux à identifier. En particulier, ces signaux sont d'une faible énergie relative, donc difficiles à identifier, et, en plus, ils sont soumis à un amortissement important du fait que les fils d'armure qui transmettent les signaux et qui jouent effectivement le rôle de guide d'ondes comme il a été constaté, sont emprisonnés entre les gaines plastiques ayant un effet d'amortissement important, à l'intérieur de la structure complexe de la canalisation flexible; ces signaux sont d'une durée très courte, et le nombre cumulé de leurs occurences devient rapidement très élevé à partir du début de leur apparition; ils sont en outre aléatoires, leur apparition étant liée d'une part aux déformations alternatives de la conduite et d'autre part à l'évolution des phénomènes internes à la structure de la conduite.

Par ailleurs, il a été trouvé que les capteurs acoustiques sont activés par des émissions ultrasonores parasites nombreuses, complexes, et de niveau relativement élevé, et que l'on ne peut effacer que partiellement en choisissant de manière appropriée la bande passante des capteurs :
- bruit dû au frottement des fils des deux nappes en contact, dans la situation normale où la lubrification reste correcte,
- bruit dû aux autres éléments de la structure du flexible (frottement entre les gaines plastiques et/ou les nappes de ruban spiralé et les nappes d'armures métalliques ou entre elles)
- bruit des écoulements internes au flexible
- bruits divers provenant de la plateforme à laquelle est raccordée la conduite flexible

Ces conditions particulières ont nécessité l'élaboration d'une méthode de traitement et analyse des signaux originale par rapport aux méthodes utilisées dans les cas comparables d'application connue de l'émission acoustique.

Ainsi par exemple, les procédés utilisant l'émission acoustique développés pour la surveillance des câbles métalliques sont inutilisables pour les conduites flexibles notamment pour les raisons suivantes :
- les phénomènes détectés sont des ruptures de fil ou la progression de fissures, alors que les évènements à diagnostiquer dans le cas des conduites flexibles sont antérieurs à la fissuration et à la rupture des fils car ces incidents ne sont pas tolérés sur les conduites en service, contrairement aux câbles métalliques;
- les signaux acoustiques sont d'un niveau relativement élevé;
- ils sont en nombre relativement très faible;
- les capteurs fonctionnent dans une bande de fréquence relativement basse, d'où la possibilité de surveiller une longueur importante de câble, 5 à 10 m par exemple (ce qui est intéressant car on doit surveiller toute la longueur du câble) alors que dans le cas des conduites flexibles l'utilisation de fréquences plus élevées est nécessaire;
- chaque capteur est monté sur un collier enserrant le câble et faisant guide d'onde ce qui permet de collecter les signaux émis par tous Les fils en contact avec le collier) ce qui n'est envisageable pour les conduites flexibles.

D'une façon générale, la surveillance par émission acoustique repose sur le principe de base de la libération brusque d'énergie sous forme d'ondes élastiques transitoires ultrasonores dans un matériau soumis à contrainte.

La plupart des applications connues dans le domaine de la surveillance de l'état d'usure des équipements mécaniques ou du vieillissement des structures métalliques concernent des cas où les phénomènes qui doivent être diagnostiqués à partir de l'émision acoustique qu'ils génèrent consistent en l'initiation et la propagation de fissures ou en rupture, ce qui n'est pas le cas de la présente invention qui concerne l'évolution de l'état de frottement entre les surfaces des fils et l'apparition du grippage.

Un rapprochement, néanmoins, peut être fait avec le cas des paliers lisses et des roulements. En effet, dans ce dernier cas, l'émission acoustique ne concerne pas la fissuration dans un matériau métallique, mais l'évolution des conditions de lubrification et de frottement entre deux surfaces en mouvement relatif et en appui sous charge l'une sur l'autre. Mais ce cas est en réalité différent :
- le mouvement relatif est continu, au lieu de mouvements répétés alternatifs, aléatoires et de faible amplitude pour des conduites flexibles,
- le phénomène diagnostiqué est la perte de lubrification entre les pièces en mouvement relatif, et, dans certains cas, l'érosion du métal antifriction d'un palier lisse, ce qui est différent du phénomène de grippage de la présente invention, lié spécifiquement aux caractères très particuliers des mouvements relatifs entre les fils
- le signal acoustique est traité en analyse synchrone (mouvement de rotation continu du rotor) ce qui est évidemment inapplicable dans le cas des conduites flexibles.

Selon la présente invention chaque apparition d'un grippage provisoire peut être associée à un signal acoustique qui constitue un évènement élémentaire spécifique apparaissant au milieu des autres évènements élémentaires non spécifiques correspondant aux émissions ultrasonores parasites qui n'ont pu être éliminées par filtrage. Le traitement des signaux émis par les capteurs peut se faire :
- soit de façon globale et continue par exemple : comptage des évènements, comptage des alternances, tracé des valeurs efficaces RMS (root mean square),
- soit par analyse périodique de l'émission acoustique à partir d'un paramètre caractérisant chaque évènement élémentaire d'émission acoustique, tel que par exemple l'énergie, l'amplitude de crête, le temps de montée ou la durée de l'évènement.

Le principe de la méthode de traitement et analyse des signaux émis par les capteurs consiste, selon la présente invention, à comparer avec une situation de référence le résultat du traitement des évènements décrits ci-dessus, qui caractérise l'état actuel des nappes d'armure dans une situation donnée et pendant une tranche de temps déterminée de sorte que l'apparition et l'accentuation du grippage sont diagnostiqués à partir de la comparaison du résultat du traitement des évènements dans la situation actuelle avec le résultat du traitement caractérisant la situation de référence, ainsi que de la variation dans le temps de la différence entre ces deux résultats de traitement.

Par ailleurs, on définit un certain nombre de situations types, de sorte que la situation dans laquelle se trouve la conduite flexible à un moment donné peut être classée dans l'une des catégories ainsi définies. Ces situations types sont établies en tenant compte des variations possibles des différents facteurs qui influencent le comportement du flexible, tels que par exemple la pression et l'écoulement internes ou les conditions d'environnement.

La méthode de traitement et analyse des signaux acoustiques se caractérise également en ce que le résultat du traitement des évènements défini comme référence pour évaluer la situation actuelle à un moment donné correspond à l'état initial dans lequel se trouvent les nappes d'armure lorsque la lubrification n'a pas commencé à se modifier sensiblement. Les résultats des traitements de références sont ainsi établis pour chacune des situations types définies ci-dessus. L'analyse des signaux acoustiques se fait ainsi non pas par comparaison avec des références établies à l'avance, en fonction des caractéristiques de la conduite flexible et de l'installation, mais de façon relative, récurrente, par simple comparaison de l'état actuel de l'émission acoustique avec ses états antérieurs et avec l'état initial au début de l'utilisation de l'installation.

On peut observer une certaine évolution du résultat du traitement des évènements au cours de la première phase du processus d'usure des fils d'armure, c'est-à-dire pendant la durée d'utilisation normale de la conduite flexible correspondant à une lubrification correcte, avant que ne se produisent les phénomènes de grippage; mais cette évolution reste faible.

Par contre, il a été trouvé que, lorsqu'apparaît une variation nette dans l'évolution, qui était au préalable lente et progressive, des résultats des traitements des évènements, et lorsque le rythme de cette variation se maintient ou augmente, une telle variation est associée à l'apparition des phénomènes de grippage. En fonction du raffinement apporté à la méthode de traitement et analyse, l'examen de cette variation permet également d'évaluer l'accentuation graduelle du grippage.

En outre, il est également possible d'adapter la méthode de traitement et analyse de manière à évaluer l'évolution de l'état de frottement entre les armures, liée à l'évolution de la lubrification et au début d'usure des fils.

Selon l'invention, on peut en outre procéder à la relubrification des fils d'armure qui s'effectue après un temps prédéterminé après le début de l'apparition de la caractéristique du phénomène d'usure accélérée ou après un temps prédéterminé après que ce signal ait dépassé une valeur de seuil déterminée.

La relubrification effectué à temps après le début de l'apparition du phénomène d'usure accélérée mais avant la rupture d'un fil d'armure stoppe de manière remarquable l'usure accélérée des fils d'armure et permet d'accroître notablement la durée de vie de la conduite flexible, le comportement de la conduite en fonctionnement, après relubrification étant tout à fait comparable à son comportement avant la délubrification ayant abouti au phénomène d'usure accélérée. La surveillance du flexible après relubrification par la mise en oeuvre du procédé selon l'invention permet naturellement de vérifier l'efficacité de la relubrification.

Les capteurs acoustiques selon l'invention ont une fréquence principale qui se situe dans une bande comprise entre 20 KHz et 1 MHz, de préférence entre 50 KHz et 500 KHz et peuvent être mis en place directement sur les armures en découpant à cet effet des lumières dans la gaine externe d'étanchéité et en reconstituant la continuité et l'étanchéité de ladite gaine ou bien être mis en place directement sur cette gaine, le cas échéant dans un évidement de celle-ci. Il apparaît en effet que la détection et l'identification des signaux acoustiques caractéristiques de l'usure accélérée est possible malgré l'atténuation du bruit émis causée par l'épaisseur de la gaine plastique.

Avantageusement, selon l'invention, on met en place au moins deux capteurs acoustiques et de préférence, un ensemble d'au moins trois capteurs. Les capteurs sont de préférence régulièrement répartis autour du flexible, à l'intérieur d'une zone dont la dimension selon l'axe du flexible est relativement limitée dans la pratique quelques dizaines de cm, 50 cm par exemple. En particulier, l'ensemble des capteurs peut être disposé sur une même section de la conduite flexible, les capteurs étant répartis équiangulairement, par exemple trois capteurs écartés angulairement de 120°.

Lorsque l'ensemble des capteurs occupe une zone s'étendant sur une certaine longueur de la conduite, les capteurs sont, de préférence, disposés selon des sections régulièrement espacées. D'une façon générale, il est avantageux que, par rapport aux fils de la nappe extérieure d'armure, les capteurs soient disposés sur, ou au voisinage de fils différents, les fils d'armure ainsi situés à l'endroit des capteurs étant, de préférence, répartis régulièrement.

Il a été cependant trouvé que le procédé de surveillance selon l'invention peut être mis en oeuvre de façon tout à fait satisfaisante avec un nombre total relativement réduit de capteurs, par exemple trois. Les signaux émis sont en effet représentatifs non seulement des fils d'armure immédiatement voisins des capteurs installés, mais de la totalité des fils des deux nappes d'armure, ce nombre de fils pouvant être très élevé.

De préférence, le ou les capteurs sont mis en place à une extrémité de la conduite flexible, par exemple à proximité de l'embout supérieur par lequel un riser est suspendu à la plateforme en surface, ou au voisinage de l'arche pour les installations de remontée d'hydrocarbures utilisant une arche. Un exemple d'installation utilisant une arche est illustré dans la conférence OTC Mai 1986, 5163 "Flexible Production Riser System for Floating Production Application in the North Sea" par T.R. MAHONEY et M. BOUVARD. En particulier, il est recommandé de disposer les capteurs placés directement sur la gaine externe de la conduite flexible, à l'intérieur du raidisseur qui est couramment mis en place autour de la conduite dans sa zone d'extrémité terminale. Un exemple de raidisseur est décrit dans FR-A-2 446 981

La mise en place des capteurs à proximité de l'embout monté à l'extrémité de la conduite flexible est particulièrement intéressante du fait qu'elle permet :

- d'une part de faciliter l'installation des câblages assurant la transmission des signaux vers les équipements de conditionnement, traitement, et transmission montés à bord de la plateforme.

- d'autre part de contrôler par l'émission acoustique l'état réel des fils d'armure dans la zone critique que constitue l'extrémité de la conduite flexible au voisinage de l'embout terminal, en particulier l'embout supérieur dans le cas des risers. Il a en effet été constaté que c'est dans cette zone que l'usure des fils est la plus rapide. Il est donc en général suffisant de "surveiller" cette zone critique de la conduite, du fait que les effets d'usure accélérée ou excessive des fils doivent l'affecter bien avant le reste de la conduite.

Il en résulte qu'il est suffisant de "surveiller" une zone relativement courte de la conduite flexible, ce qui est particulièrement intéressant parce que la bande de fréquence relativement élevée que doivent présenter les capteurs rend leur portée relativement courte, de l'ordre de 50 cm dans chaque sens par exemple.

Selon un mode avantageux de mise en oeuvre du procédé selon l'invention, il est possible, avec une pluralité de capteurs (au moins 2 capteurs), de vérifier à tout instant le bon fonctionnement de l'installation, les capteurs étant du type émetteur-récepteur, en utilisant un capteur comme émetteur et les autres comme récepteurs. On envoie ainsi une impulsion (par exemple : un créneau, ou une succession de créneaux) dans le circuit, ce qui excite le capteur et le rend émetteur, la même opération pouvant être répétée avec les autres capteurs. Il est avantageux, en particulier, d'envoyer l'impulsion au niveau d'un interface situé entre l'amplificateur et le préamplificateur auquel est appliqué le signal de sortie du capteur, le préamplificateur étant muni d'un dispositif connu en soi, qui le rend réversible et permet à l'impulsion de traverser le préamplificateur et exciter le capteur.

Selon un autre mode de réalisation, les capteurs sont répartis en au moins deux groupes, les capteurs d'un même groupe ayant la même fréquence principale et pouvant être identiques, et les fréquences principales des deux groupes étant différentes, et chaque groupe comprenant de préférence une pluralité de capteurs.

En particulier, si l'installation comporte des capteurs directement placés sur les fils d'armure et des capteurs placés sur la gaine externe, les capteurs sur fils d'armure peuvent constituer un premier groupe ayant une certaine fréquence principale, et les capteurs sur la gaine un deuxième groupe ayant une fréquence principale différente, de préférence inférieure à celle du premier groupe.

Dans le but de mieux faire comprendre l'invention on va maintenant en décrire un exemple de réalisation en se référant au dessin annexé dans lequel :

- la figure 1 est une vue schématique d'un tronçon de conduite tubulaire flexible équipé pour la mise en oeuvre du procédé de l'invention,
- la figure 2 est un graphique montrant l'évolution de la valeur efficace du signal de bruit détecté par un capteur acoustique et du signal émis par un capteur d'effort,
- les figures 3 et 4 sont des graphiques montrant l'évolution dans des conditions experimentales de signaux traités correspondant respectivement au bruit detecté par un capteur acoustique et à un effort mesuré par un capteur d'effort.
- la figure 5 est une vue schématique d'un capteur utilisable pour la mise en oeuvre de l'invention, et
- la figure 6 est une vue en coupe selon VI-VI de la figure 5.

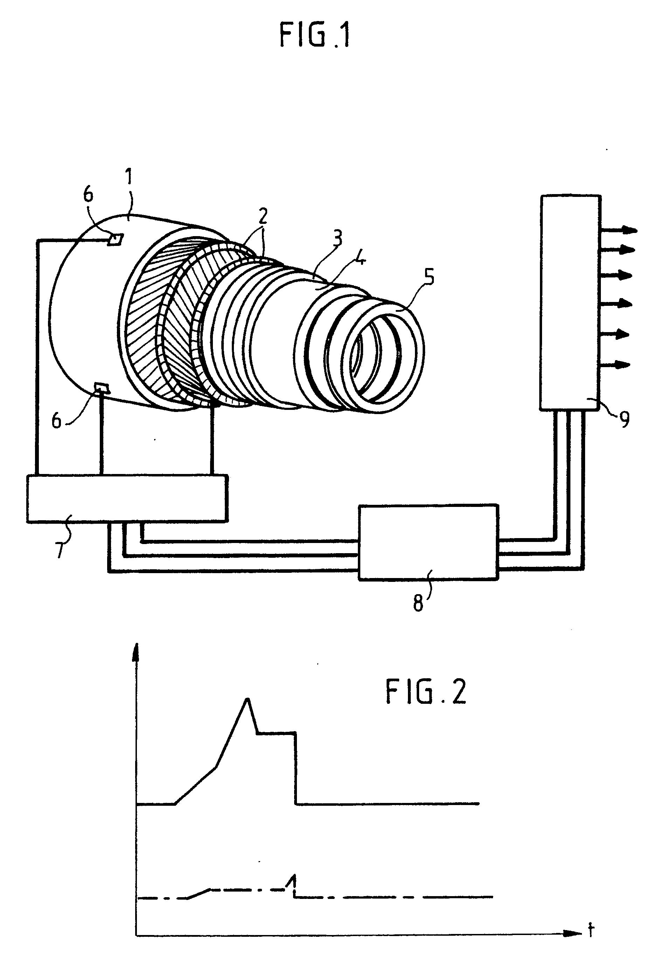

La conduite tubulaire flexible illustrée à la figure 1 est du type "rough-bore" et comporte de l'extérieur vers l'intérieur une gaine externe d'étanchéité 1, une armure de résistance à la traction constituée de deux nappes croisées 2 de fils en acier ou en un autre métal tel que l'aluminium disposés en hélice autour de la conduite avec des angles d'armage égaux mais opposés par rapport à l'axe de la conduite, une armure 3 de résistance à la pression constituée par exemple de fils profilés de section en Zéta enroulés par spiralage sous un angle voisin de 90° par rapport à l'axe de la conduite, une gaine interne d'étanchéité 4, et dans l'exemple considéré, une armure 5, notamment en feuillard d'acier, pour assurer la résistance à l'écrasement et a la pression extérieure.

Selon l'invention, on met en place sur la gaine externe 1 ou à travers celle-ci au contact de la nappe extérieure de fils d'armure 2, des capteurs acoustiques 6, par exemple au nombre de trois répartis équiangulairement autour de la conduite.

Les signaux de sortie des capteurs acoustiques 6 passent par des préamplificateurs 7 et des interfaces 8, puis dans un équipement 9 comprenant des amplificateurs, des conditionneurs et un système de traitement. Les signaux peuvent alors être analysés par un ordinateur placé sur le site d'utilisation ou à distance, auquel cas les signaux peuvent être transmis notamment par voie téléphonique ou hertzienne.

Une première partie de l'installation, comprenant les capteurs 6 et les préamplificateurs 7, peut ainsi être réalisée sous forme d'équipement à sécurité intrinsèque de manière à pouvoir être utilisée dans la zone réputée dangereuse de la plateforme supportant la conduite flexible. Elle est reliée par l'interface 8 aux autres équipements 9 qui peuvent être installés en dehors des zones dangereuses.

Pour vérifier le bon fonctionnement de l'installation, une impulsion est envoyée dans le circuit au niveau de l'interface 8, les préamplificateurs 7 étant rendus réversibles.

La courbe représentée en trait plein sur la figure 2 montre l'évolution dans le temps des résultats du traitement des signaux émis par un capteur acoustique, les signaux étant traités dans le cas présent sous la forme du tracé des valeurs efficaces ou valeurs RMS (Root Mean Square). On voit sur la partie gauche de la courbe un tronçon sensiblement horizontal correspondant au bruit émis par les fils d'armure dans des conditions normales de frottement lubrifié. L'augmentation rapide du bruit correspond à une phase d'usure accélérée résultant d'un frottement à sec par suite d'une délubrification. Ce graphique montre nettement l'influence d'une relubrification à la suite de laquelle le bruit redevient sensiblement constant. On a également illustré sur le graphique en trait mixte le signal émis par un capteur d'effort placé au contact d'un fil d'armure qui redevient sensiblement constant après la relubrification suivant une phase d'usure accélérée.

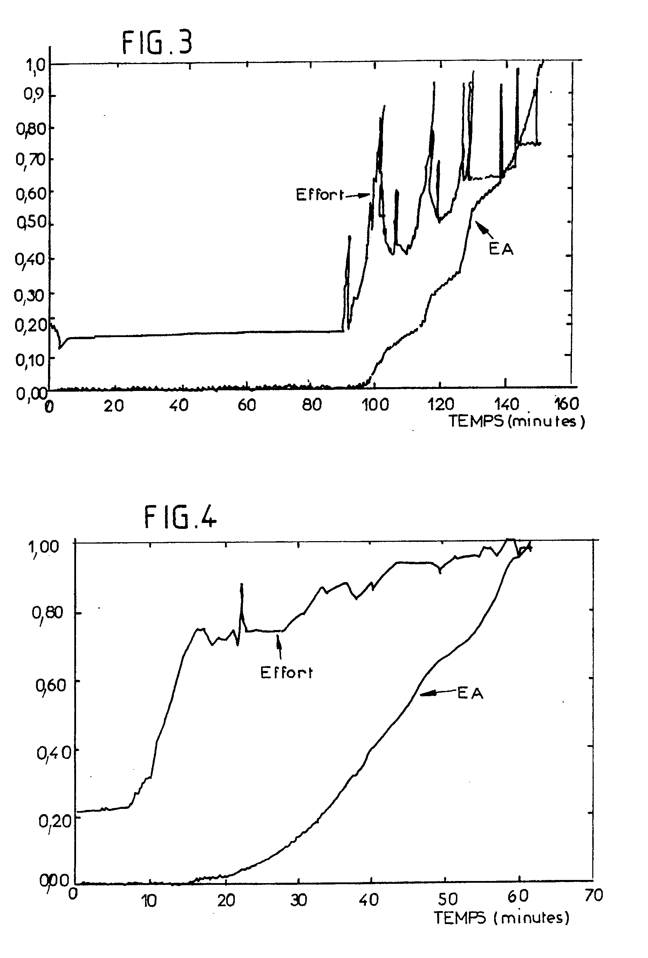

La figure 3 représente le résultat d'un essai de laboratoire où deux éprouvettes représentatives chacune d'une couche de fils d'armure sont mises en frottement par un mouvement relatif périodique d'amplitude constante en déplacement. Un capteur acoustique et un capteur d'effort ont été mis en place sur l'une des éprouvettes, le capteur d'effort délivrant un signal proportionnel à la résistance de frottement.

Sur le graphique de la figure 3 la courbe désignée par "Effort" est représentative du signal émis par le capteur d'effort et la courbe désignée par "EA" est représentative du signal émis par le capteur acoustique.

Le traitement des signaux est effectué sur la base d'un comptage cumulé des impulsions supérieures à une valeur de seuil donnée et les valeurs indiquées en ordonnées sont normées à 1.

On voit nettement sur le graphique deux périodes, l'une correspondant à un régime d'usure lente et l'autre correspondant à un régime d'usure accélérée. Pendant cette deuxième période la courbe "EA" se présente sous la forme d'une succession de "marches" qui correspondent aux pics très marqués qui apparaissent sur la courbe "Effort" et qui résultent de la formation et la rupture des jonctions qui s'établissent très brièvement entre les deux matériaux en frottement.

La figure 3 correspond à un essai dans lequel les mouvements de déplacement relatifs des deux éprouvettes présentent une forte amplitude.

A titre de comparaison la figure 4 représente le résultat d'un essai similaire dans lequel les mouvements de déplacement étaient de faible amplitude.

Dans ce cas, le phénomène d'usure accélérée se produit plus progressivement que dans le cas du premier essai.

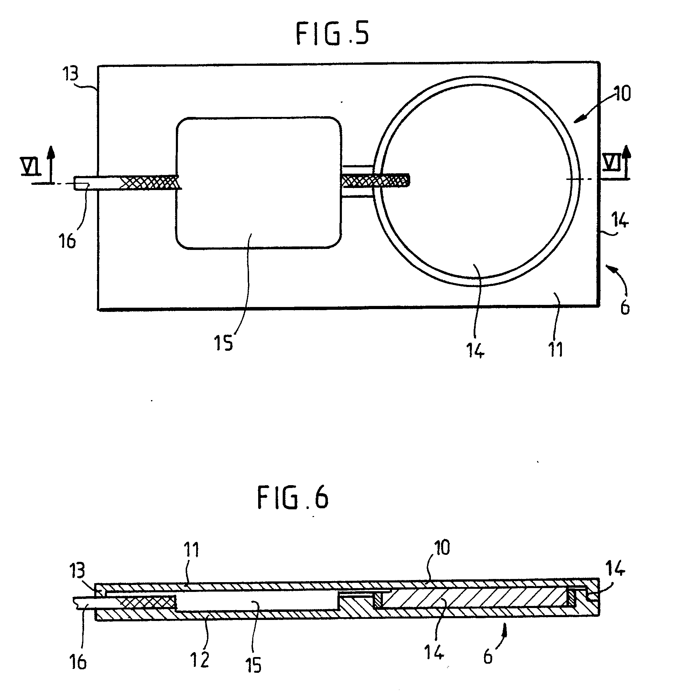

On a illustré aux figures 5 et 6 un capteur acoustique utilisable pour la mise en oeuvre du procédé selon l'invention.

Le capteur acoustique 6 comporte un boîtier étanche 10 réalisé en matière plastique telle que par exemple une résine époxy ou polyester.

Le boîtier 10 présente une forme parallélépipédique aplatie avec deux surfaces principales opposées de section rectangulaire allongée 11, 12 et deux faces d'extrémité longitudinales 13 et 14.

De préférence l'épaisseur du boîtier, c'est-à-dire la hauteur des faces d'extrémité 13 et 14 est comprise entre environ 4 et environ 10 mm. Dans l'exemple illustré, cette épaisseur est de l'ordre de 6 mm.

L'épaisseur du capteur selon l'invention est ainsi notablement inférieure à l'épaisseur des capteurs acoustiques connus qui est habituellement de l'ordre de 20 à 30 mm.

De préférence, la longueur du boîtier 10 du capteur est au moins égale à 1,5 fois sa largeur.

Dans un exemple de réalisation, la longueur du boîtier est d'environ 80 mm pour une largeur d'environ 40 mm.

A l'intérieur du capteur est logé un transducteur céramique piézo-électrique en forme de disque 14 dont le signal de sortie est transmis au travers d'un circuit électronique antidéflagrant 15 à un câble de sortie 16 qui, comme on le voit sur le dessin, traverse la face d'extrémité longitudinale 13 du boîtier en étant disposé selon l'axe longitudinal du boîtier, ou le cas échéant, parallèlement à celui-ci.

Il convient de rappeler que, dans les capteurs acoustiques connus, le câble de sortie traverse une face principale du boîtier en s'étendant perpendiculairement au plan de celle-ci.

Le transducteur céramique piézo-électrique présente dans un exemple de réalisation une fréquence de résonance de l'ordre de 70 KHz.

On peut naturellement optimiser le choix de cette fréquence en fonction des caractéristiques de la conduite flexible et des conditions d'utilisation, la fréquence principale des capteurs pour la mise en oeuvre du procédé de l'invention se situant dans une bande comprise entre 20 KHz et 1 MHz, de préférence entre 50 et 500 KHz.

On peut dans certains cas également choisir des capteurs à bandes élargies en utilisant un transducteur approprié ou en incorporant dans le capteur un circuit amortisseur.

La présence du circuit électronique antidéflagrant 15 entre le transducteur 14 et le câble de sortie 16 permet de réaliser un capteur à sécurité intrinsèque conforme aux règlements applicables aux équipements installés dans les zones dites dangereuses des plateformes de production pétrolières.

La faible épaisseur du capteur permet de l'installer sur la gaine externe du câble de la conduite flexible sans qu'il risque d'être endommagé dans la mesure où sa protubérance est très faible. Cette protubérance peut également être réduite en logeant le capteur en partie ou sur toute son épaisseur dans un évidement ou un logement pratiqué dans la gaine externe de la conduite flexible. On peut également le loger entre deux gaines plastiques de la conduite flexible directement au contact l'une de l'autre.

Le capteur est mis en place de manière que sa longueur soit parallèle à l'axe longitudinal de la conduite flexible. Bien qu'il soit rigide, le capteur peut ainsi être posé sans difficulté sur un flexible dont le diamètre peut être relativement faible, par exemple de l'ordre de 50 mm environ du fait de sa faible largeur dans la direction perpendiculaire à l'axe de la conduite flexible.

Bien que l'invention ait été décrite en liaison avec un mode de réalisation particulier, il est bien évident qu'elle n'y est nullement limitée et qu'on peut lui apporter différentes variantes et modifications sans pour autant sortir ni de son cadre ni de son esprit.

**Revendications**

1. Procédé de surveillance en service de câbles et conduites tubulaires flexibles comportant au moins une couche d'armure de résistance à la traction composée de fils métalliques, caractérisé par le fait que l'on détecte à partir d'au moins un capteur acoustique (6) disposé sur/ou au voisinage des fils d'armure (2) les ondes ultrasonores émises par le câble ou la conduite en service, que l'on traite et analyse (7,8,9) les signaux émis par le ou les capteurs de façon à identifier des caractéristiques représentatives d'un phénomène d'usure accélérée entre les fils d'armure.

2. Procédé selon la revendication 1, caractérisé par le fait que le ou les capteurs acoustiques (6) sont mis en place au voisinage d'une extrémité du câble ou de la conduite tubulaire flexible.

3. Procédé selon l'une quelconque des revendications 1 et 2, caractérisé par le fait que le ou les capteurs acoustiques (6) sont mis en place sur la gaine extérieure (1) du câble ou de la conduite tubulaire flexible.

4. Procédé selon l'une quelconque des revendications 1 à 3, caractérisé par le fait que le ou les capteurs acoustiques (6) sont mis en place à l'intérieur d'un raidisseur placé sur le câble ou la conduite flexible.

5. Procédé selon l'une quelconque des revendications 1 à 4, caractérisé par le fait qu'il comporte au moins deux et de préférence un ensemble d'au moins trois capteurs acoustiques (6) régulièrement répartis autour du câble ou de la conduite flexible dans une zone de dimension relativement limitée en dimension axiale.

6. Procédé selon la revendication 5, caractérisé par le fait qu'il comprend deux groupes de capteurs (6) disposés dans des sections successives du câble ou de la conduite flexible et qui présentent des fréquences principales différentes.

7. Procédé selon l'une quelconque des revendications 5 et 6 comportant plusieurs capteurs acoustiques (6) de type émetteur-récepteur en au moins une section, caractérisé par le fait que pour vérifier le fonctionnement de l'installation on utilise l'un des capteurs comme émetteur, les autres comme récepteurs.

8. Procédé selon l'une quelconque des revendications précédentes, caractérisé par le fait que le ou les capteurs acoustiques (6) présentent une fréquence principale située dans une bande comprise entre 20 KHz et 1 MHz, de préférence entre 50 et 500 KHz.

9. Procédé selon l'une quelconque des revendications précédentes, caractérisé par le fait que l'on procède à une relubrification des fils d'armure (2) lorsque les signaux émis par les capteurs acoustiques et traités mettent en évidence un phénomène d'usure accélérée.

10. Capteur acoustique pour la mise ('en oeuvre du procédé selon l'une quelconque des revendications 1 à 9, comprenant un boîtier, un transducteur céramique piézo-électrique et un câble de sortie de signaux, caractérisé par le fait que le boîtier (10), réalisé en matière plastique, présente une forme parallélépipédique allongée aplatie, et que le câble de sortie (16) est disposé de façon à traverser une face d'extrémité longitudinale (13) du boîtier (10) et s'étendre parallèlement à ou le long de l'axe longidudinal du boîtier.

11. Capteur selon la revendication 10, caractérisé par le fait que le boîtier (10) présente une épaisseur comprise entre environ 4 et environ 10 mm.

12. Capteur selon l'une quelconque des revendications 10 et 11, caractérisé par le fait qu'il présente une longueur au moins égale à 1,5 fois sa largeur.

# FIG.1

# FIG.2

## FIG.3

## FIG.4

FIG.5

FIG.6

Office européen
des brevets

**RAPPORT DE RECHERCHE
EUROPEENNE**

Numéro de la demande

**EP 90 40 2396**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 609 994  (THE UNIVERSITY OF MANITOBA) * Résumé * | 1 | F 17 D 5/06 G 01 M 3/24 G 01 V 1/00 G 01 N 29/00 |
| | — — — | | |
| A | US-A-4 549 437  (J.J. WEINS) | | |
| | — — — | | |
| A | US-A-4 448 062  (CONOCO INC.) | | |
| | — — — | | |
| A | FR-A-2 523 726  (GENERAL ELECTRIC CO.) | | |
| | — — — | | |
| A | DE-A-3 245 505  (RHEINISCH-WESTFALISCHER TECH-NISCHER OBERWACHUNGSVEREIN e.V.) | | |
| | — — — | | |
| A | MESURES - REGULATION - AUTOMATISME, vol. 46, no. 5, mai 1981, pages 47-51, Paris, FR; J.-C. LENAIN: "Controle de reservoirs en materiaux composites par emission acousti-que" | | |
| | — — — | | |
| A | ENGINEERING, vol. 209, no. 5433, 19 juin 1970, pages 639-642, Londres, GB; A.A. POLLOCK: "Acoustic emission" | | |
| | — — — — — | | |

| | DOMAINES TECHNIQUES RECHERCHES (Int. Cl.5) |
|---|---|
| | F 17 D 5/00 G 01 M 3/00 G 01 V 1/00 G 01 H 1/00 G 01 M 29/00 E 21 B 17/00 |

Le présent rapport de recherche a été établi pour toutes les revendications

| Lieu de la recherche | Date d'achèvement de la recherche | Examinateur |
|---|---|---|
| La Haye | 16 novembre 90 | DE SMET F.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant